# EUROPEAN PATENT APPLICATION

(11) **EP 2 146 528 A1**
(43) Date of publication of application: **20.01.2010**
(21) Application number: 08305401.5
(22) Date of filing: 15.07.2008
(51) Int. Cl.: H04W 4/06, H04N 7/16

(54) **Method for accessing a service offered from a token, corresponding token and system**

(71) Applicant: GEMPLUS, 13420 Gémenos (FR)
(72) Inventor: Praden, Anne-Marie, 13122, VENTABREN (FR); Brugal, Hervé, 13008, MARSEILLE (FR)

(57) **Abstract**

Method (30) for accessing a service offered from a token. The token is coupled with a terminal. The terminal comprises means for receiving broadcasted messages. The broadcasted messages are broadcasted from at least one server, said first server.
The method further comprises the first server sends (32), through the terminal, within the broadcasted messages at least one piece of data intended to the token and executable by the token, said executable data; and the token executes (38) the executable data by triggering an execution of an application embedded at least in part within the token.
It relates also to a corresponding token and system.

## Description

### Field of the invention:

The invention relates, in a general manner, to a method for accessing a service offered from a token.

Within the present description, an access to a service means to command a launch of an execution of a corresponding application.

Moreover, the invention relates to a token for accessing an offered service.

Within the present description, a token is any portable smart object that is not autonomous in power and intended to cooperate with a host device.

Finally, the invention relates to a system for accessing a service offered from a token.

More particularly, the present invention applies to a field relating to a mobile-TV.

### State of the art:

As known per se, the mobile-TV includes a TV service brought over one or several telecommunication networks to mobile phones.

A server, as a content provider, broadcasts messages to be received by the mobile phones.

Each mobile phone cooperates with a smart card that stores information, in order to provide the mobile phone user with the TV service.

However, such a known solution has a major disadvantage.

As a matter of fact, it is not possible to interact with an application that can be launched from the smart card, as token.

### Summary of the invention:

The invention eliminates such a major disadvantage by providing a method for accessing a service offered from a token. The token is coupled with a terminal. The terminal comprises means for receiving broadcasted messages. The broadcasted messages are broadcasted from at least one server, said first server.

According to the invention, the method comprises, as steps, the first server sends, through the terminal, within the broadcasted messages at least one piece of data intended to the token and executable by the token, said executable data, the token executes the executable data by triggering an execution of an application embedded at least in part within the token.

The principle of the invention consists in addressing, via the terminal, thanks to data conveyed within the broadcasted messages, an application that is actuated from the token.

The application can be executed to provide a user with a corresponding service offered by the sole token or via the token in cooperation with another entity.

As another entity, it can be the terminal, the server broadcasting the messages, and/or another server provided that there is an existing communication channel that can be used from the token to the entity.

Thus, a service relating to the whole application that is to be executed is offered to a user which owns such a token.

The proposed solution allows to launch a processing performed by the token.

Such a launch of the token processing is automatically synchronized with the broadcasted messages.

The proposed solution allows an interaction with the token from the server that broadcasts messages without any user intervention and without any installation of a specific application within the terminal.

The proposed solution is convenient for the user and therefore user-friendly.

According to a further aspect, the invention is a token for accessing an offered service. The token is intended to be coupled with at least one external entity. The token comprises data storing means, data processing means and communication means for communicating with the external entity.

According to the invention, the token is adapted to receive at least one piece of data executable by the token, said executable data, and the token is adapted to execute the executable data by triggering an execution of an application embedded at least in part within the token.

As token, it can be any portable smart device that is not autonomous in power.

According to a further aspect, the invention is a system for accessing a service offered from a token. The system comprises a token and a terminal coupled with the token. The token comprises first data storing means, first data processing means and first communication means for communicating with the terminal. The terminal comprises second data storing means, second data processing means and second communication means for communicating with the token. The terminal further comprises means for receiving messages broadcasted from outside the system.

According to the invention, the terminal is adapted to extract from the broadcasted messages at least one piece of data intended to the token and executable by the token, said executable data, and send to the token the executable data, and the token is adapted to execute the executable data by triggering an execution of an application embedded at least in part within the token.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of an embodiment of an electronic system comprising a mobile phone and a smart card coupled to the mobile phone, the system being connected to a broadcast server and adapted to access an application that can be actuated from the smart card according to the invention;
- Figure 2 represents a simplified diagram of an embodiment of the smart card of figure 1, as token, to be connected to the mobile phone of figure 1;
- Figure 3 illustrates a flow chart of an exemplifying method for accessing a service offered from the smart card of figure 2; and
- Figure 4 is a message flow between the broadcast server, a mobile phone, a smart card, and a mobile network server, as the different entities implementing the method of figure 3.

### Detailed description of one embodiment:

Herein under is considered a case in which the invention method for accessing a service offered from a SIM (acronym for "Subscriber Identity Module") type smart card, as token, is implemented by the SIM type smart card in cooperation with a mobile telephone, as terminal.

However, it is only for exemplifying purposes and is not considered to reduce the scope of the present invention.

For example, instead of being constituted by a SIM type smart card, the token can be constituted by a WIM (acronym for "Wireless Internet Module") type smart card, a dongle of the USB (acronym for "Universal Serial Bus") type (that does not need any specific reader within a host computer), a smart card, a MMC (acronym for "MultiMediaCard") card, a SD (acronym for "Secure Digital") Card, and/or any other electronic medium that may have different form factors. According to still other examples, the token can also be a chip fixed, possibly in a removable manner, to a host device, or a chip to be soldered within a host device.

Likewise, instead of being constituted by a mobile phone, the terminal can be constituted, for example, by a set-up box, a desktop computer, a laptop computer, a media-player, a game console, a handset and/or a Personal Digital Assistant (or PDA).

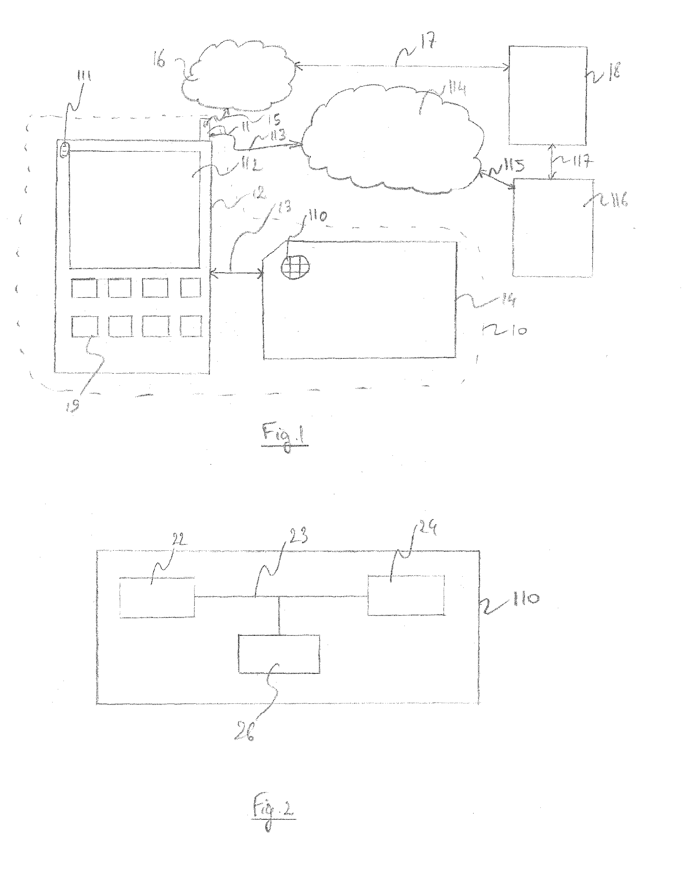

Figure 1 shows an electronic system 10 connected to a broadcast server 18 and a mobile network server 116.

The system 10 comprises a mobile telephone 12, as a user device, and a SIM type smart card 14 that is coupled to the mobile telephone 12.

For simplicity, the mobile telephone 12 and the SIM type smart card 14 are termed hereinafter respectively the phone 12 and the card 14.

The broadcast server 18, as service provider, sends broadcasted messages, through a telecommunication network 16, to several mobile stations (not represented), among which there is the electronic system 10, as one mobile station. The broadcasted messages convey content data.

The content data preferably includes audio and video data relating to a TV service.

The content data can be constituted by audio data or video data.

According to one interesting feature of the invention, the broadcasted messages convey a script and executable data intended to be processed by an application embedded within the card 14.

The script is included within the broadcasted data. The script is interpreted and executed by an application of the phone 12 that is thus requested to address an application embedded within the card 14 with the executed data.

An application of the phone 12 that processes the broadcasted messages is responsive to the script.

An application of the card 14 is responsive to the executable data that are re-directed by the phone application thanks to the script.

The script can be a JavaScript, as a scripting language that has been standardized by ECMA (stands for "European Computer Manufacturers Association") International within the ECMA-262 specification, or termed ECMASCRIPT.

An application of the phone 12, also termed media player, processes the broadcasted service, the audio and video data, in order to transmit the audio data through a loudspeaker 111 (or an earphone) and display the video data through a display screen 112.

During the processing, on the fly, of the broadcasted service, the phone 12, as an intermediary between the broadcast server 18 and the card 14, processes the script and addresses a card application. The card application is identified within the script while forwarding to the card application the executable data intended to the card application and associated with the script.

The card 14, as the final interlocutor, takes in charge the executable data through the identified application that is thus commanded to be triggered.

The identified application of the card 14 is activated and synchronized with the broadcasted messages including content data.

The identified application of the card 14 processes the executable data.

The application of the card 14 can request an interaction with a user, as a corresponding offered service.

The user accesses a man machine interface, in order to be able to exploit, at least in part, one or several services accessible from and/or through the card 14. The user can therefore interact with a service controlled from and/or through the card 14.

The man machine interface may include a keyboard 19 provided by the phone 12.

The service offered through an interaction with a phone user can be a betting service, a fidelity service (or termed loyalty service), a transaction service, a payment service, a voting service, a survey service, and/or a poll service.

The phone 12 includes, as data processing means, at least one microprocessor, volatile and non-volatile memories, at least two Input/Output (or I/O) interfaces linked together through a data and control internal bus (not shown).

The memories store data relating to an Operating System and applications, among which there is a media player, and, in particular, the content data provided by the broadcast server 18 through its broadcasted messages.

The I/O interfaces comprise one I/O interface that is intended to communicate, through a bi-directional link 13, with the card 14. The I/O interfaces comprise another I/O interface that is intended to communicate, through a link 15 that is at least mono-directional, namely directed from the broadcast server 18 to the phone 12.

The microprocessor processes and controls data within the phone 12 and/or data to be exchanged with outside of the phone 12. The microprocessor controls and communicates with all the components of the phone 12, such as the I/O interfaces.

The phone 12 has an antenna 11 to communicate, over the air (or OTA), with a long range radiofrequency bi-directional link 113, through a cellular telecommunication network 114, to the mobile network server 116.

The phone 12 has a contact interface (not represented) of the type ISO (acronym for « International Standard Organization ») 7816 to interact with the card 14.

The phone 12 is adapted to communicate data with the card 14 by using Application Protocol Data Unit.

The phone 12 has preferably the capacity to communicate with a mobile network server 116. The phone 12 is connected, via a first bi-directional link 113, through a cellular telecommunication network 114, and via a second bi-directional link 115, to the mobile network server 116.

The phone 12 is set to extract from data transported within the broadcasted messages intended to the card 14 and executable by the card 14 and direct the executable data to the card 14.

The mobile network server 116 is integrated within an entity of a system that can be constituted by the system usually known as a back-end OTA system. The mobile network server 116 is directly or indirectly controlled by a telecommunication operator.

The mobile network server 116 and the broadcast server 18 are connected via a bi-directional link 117, in order to exchange information. Among others, the mobile network server 116 transmits to the broadcast server 18 all the scripts accompanied with corresponding executable data targeting card applications that are to be broadcasted.

Alternatively, the mobile network server 116 and the broadcast server 18 constitute one and the same server. According to such an alternative, the server is connected through a bi-directional link to the mobile phones, as mobile stations or termed user equipments.

As known per se, to interact with the user from and/or through the card 14, the phone 12 has the capacity to implement a SIM ToolKit (or STK) Mechanism. Thus, the phone 12 is adapted to interpret any proactive command originating from the card 14 involving a user operation, such as "Display text", "Set-up menu", "Select menu", "Get-inkey", and/or "Get-input".

The phone microprocessor is also configured to send back, once a displayed service has been selected among the displayed one(s), to the card 14 another command for launching the execution by the card 14 of the selected service with possible multiple selected choice(s) and/or data entered by the user.

The cellular telecommunication network 114 is adapted to implement a 2G (acronym for a second generation network, i.e. GSM for "Global System for Mobile communications"), 3G (acronym for a third generation network, i.e. UMTS for "Universal Mobile Telephone System") and/or CDMA (acronym for a "Code Division Multiple Access") mode(s).

The cellular telecommunication network 114 is, for example, linked, through a cable 115, to the mobile network server 116.

The card 14 is inserted within the phone 12.

The card 14 includes a chip 110 described in more details in relation with the figure 2.

The chip 110 communicates with the phone 12, via the bi-directional link 13, through a contact interface of the type ISO 7816.

According to another embodiment, instead of the contact interface, the card 14 and the phone 12 are coupled to each other, through a short range radiofrequency link, as contactless interface, such as a Bluetooth (registered trademark) or a Wifi (registered trademark) link.

The chip 110 allows to identify a carrier (or termed subscriber) of the card 14 before the broadcast server 18 and the mobile network server 116, in order to be allowed to access some service(s) that an operator, or on its behalf, (possibly through another operator) proposes through the broadcast server 18 and/or the mobile network server 116.

As to an application targeted by the script from the broadcast server 18, it can constitute any application embedded solely within the card 14. The targeted application may have been previously either loaded during a manufacturing process of the card 14 including its personalization process or downloaded from the mobile network server 116 to the card 14 that stores it.

The application of the card 14 can be directly triggered, in a remote manner, namely from the broadcast server 18.

The targeted application can be an action, like a function, that does not require any user interaction. Such a function can be an authentication function and/or an electronic signature function that uses data stored within the chip 110.

To interact with the user, the chip 110 of the card 14 can be configured to use a command, such as a proactive command, to be transmitted to the phone 12, to propose, on the card own authority, through the phone display screen 112, a list of service(s) supported at least in part by the card 14. The command is preferably accompanied with the list of service(s) to be displayed.

For each service, one or several items can be proposed and selected by the user in accordance with her or his choice(s), through the man machine interface.

Furthermore, the user can enter data for some selected service, in order to give her or his chosen personal data.

Thus, an access to a service or services offered by the card 14 is rendered possible, in a direct manner, through a pop-up window displayed upon the phone display screen 112 to propose, via a menu, an interaction with the user.

The user interacts with the man machine interface to select or order a service, amongst the one(s) displayed through the menu, possibly by informing and/or choosing some proposed item(s).

The card 14 is able to receive another command originating from the phone 12 and for triggering an execution of another application relating to one selected service among the one(s) that has(have) been displayed with the user personal data and/or choice(s). In such a case, the other application is an induced application after having triggered an application implemented by the card 14 by which at least one pop-up window is proposed through which the user sets its choices.

The card 14 executes the induced application associated by the identified service that has been selected and possibly informed by the user.

As to an induced application relating to the card 14, it can be to make a phone call or send at least one Short Message Service (or SMS) message to the mobile network server 116 and/or a person registered within a phone book stored within the card 14.

The card 14 may involve mobile network server 116 at least in part to completely execute the corresponding selected application. To involve mobile network server 116, the card 14 sends it, through the phone 12, a request allowing the mobile network server 116 to further execute the launched or triggered application.

The user can easily access a service offered from and/or through the card 14.

Besides the card 14, a part of the application to be executed is lodged within the back-end OTA system, the mobile network server 116 can be involved.

For example, a betting service module within the back-end OTA system, the mobile network server 116 sends to the broadcast server 18 for several allowed cards (whose carriers have subscribed to the mobile TV service) including the card 14, one message including data relating to one questionnaire to be displayed by means of a broadcasting of corresponding script and executable data during a specific TV program.

The broadcast server 18 integrates the script and executable data executable data within the messages to be broadcasted for the specific TV program.

The script allows to remotely command, through the phone 12, the card 14, for a display of a pop-up window presenting at least one item to be chosen and validated or cancelled by the phone user.

The card 14 is requested to trigger a dedicated application embedded within the card 14.

During a play of a TV program, for example, a horse race, a user is, thanks to an interactive pop-up window (or banner) that is to be displayed, prompted to bet for it. The interactive pop-up window is a data stream synchronized with the video and audio data stream containing the information to be displayed as the video progresses.

The interactive pop-up window can be included within data relating to the Electronic Service Guide (or ESG) stream. As known per se, the ESG data stream is itself comprised within the Related Material fragment to the TV program.

The incorporation of one script within the data stream relating to the TV program can allow the phone 12 that executes the script to launch a targeted application from the card 14, in a combined manner, to an apropos broadcasted service.

The targeted application is stored and executed by the card 14.

The card 14, during the execution thus triggered of the targeted application can send back data to the mobile network server 116 by using STK mechanism and the channel of communication relating to the cellular telecommunication network 114, as an interaction channel.

The mobile network server 116 may then control the sending back of data originating from the card 14, by means of the broadcast channel, while possibly being synchronized with the audio and video data stream.

Figure 2 schematically shows components incorporated within the chip 110 of the card 14 intended to interact with the phone 12, as host device.

The chip 110 comprises, as data processing means, one microprocessor 22, volatile and non volatile memories 24 and at least one I/O interface 26 linked together through a data and control internal bus 23.

The I/O interface 26 is used to exchange data with outside of the card 14.

The microprocessor 22 executes notably any application stored within card memories.

The microprocessor 22 controls and communicates with all the components of the card 14, such as the memories to read them and possibly write into them.

The memories 24 store data, in particular data relating to an Operating System and SIM Toolkit applications and data relating to a phone book, contacts, emails and/or a personal organizer. The memories can be constituted by one or several EEPROM (acronym for "Electrically Erasable Programmable Read-Only Memory"), one or several ROM (acronym for "Read Only Memory"), one or several Flash memories, and/or any other memories of different types, like one or several RAM (acronym for "Random Access Memory").

The memories 24 store data relating to an application that is actuated by executable data originating from outside the card 14, through the I/O interface 26. The application then processes the executable data by possibly exchanging data with the phone 12, in order to interact with the phone 12 and possibly its user.

The memories 24 also store data relating to at least one event-status is to be surveyed by the card 14. The event-status can be the time. The event-status is used to trigger a check by the card 14 whether a service is available.

The chip 110 is configured so as to execute the executable data originating from outside by triggering an execution of a targeted application embedded within the chip 110.

The memories 24 preferably comprise credentials, such as a PIN and/or keys, among which an encrypting key, a decrypting key. The credentials can be used to authenticate the user (before the mobile network server 116) and/or sign data to be sent to outside world (like the mobile network server 116), possibly by using data that is received from outside. The credentials can be used to sign data originating from one or several operations interaction with the user through the man machine interface of the host device.

The memories 24 store at least one application providing at least one security function, a digital signature, a user identification, a user authentication, an on-board key generation, and/or a secure exchange for online transactions.

The smart card 14 allows to obtain a portable electronic medium that is user-friendly.

The smart card user does not need to intervene, in order to configure its direct involvement from the broadcast server, as an external entity.

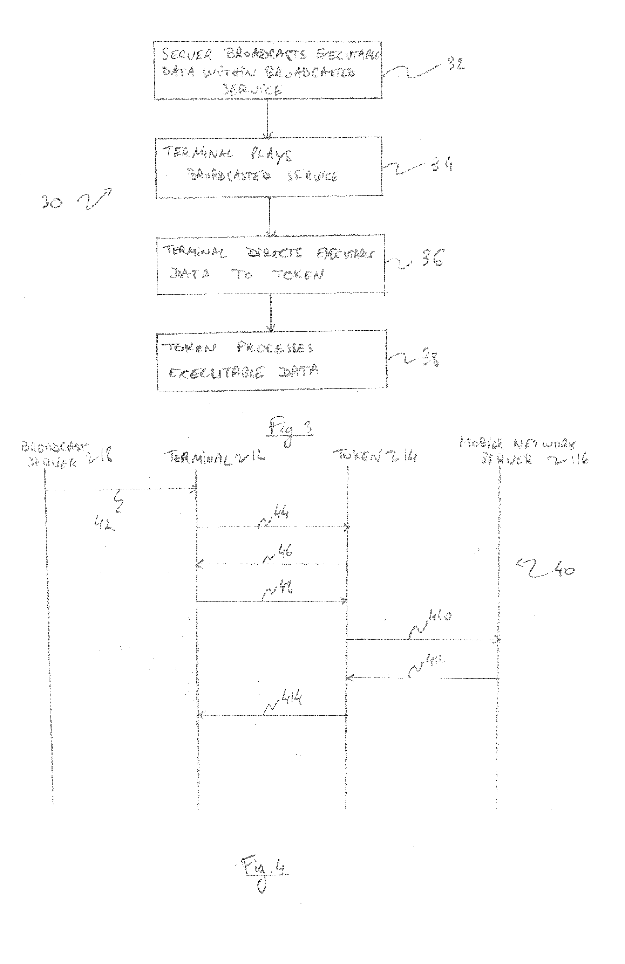

Figure 3 depicts a sequence 30 of steps that are implemented to actuate a service offered from the card 14.

At first, a broadcast server broadcasts 32 within a broadcasted service executable data intended to the card 14.

The phone 12 receives and processes 34 the broadcasted service. The phone user benefits from the broadcasted service.

During the processing of the broadcasted service, the phone 12 re-directs 36, as a router, thanks to a part of executable data, another part of the executable data to an application identified within the executable data and that is hosted by the card 14.

The card 14 processes 38 the part of the executable data that it receives from the phone 12.

As result, the card 14 may involve an interaction with the user.

Figure 4 shows a particular example of messages 40 that are exchanged between several entities, namely the broadcast server 18, the phone 12, the card 14 and the mobile network server 116, when the card 14 implies an interaction with the user while implementing the STK mechanism.

The broadcast server broadcasts messages 42 that contain audio and video data and executable data the addressee of which is the card 14. The executable data is intended to a specific application of the card 14, known as the WIM application.

The executable data requests, for example, to open a Wireless Application Protocol (or WAP) channel, to sign data relating to a horse race displayed through a window, like the horse chosen by the user among the horses specified on the window, a date and time, as a time stamp, and an amount value to be informed by the user, and to transmit to the mobile network server 116 the signed data through the opened WAP channel.

The phone 12 processes audio and video data and a part of the executable data.

As a result of the processing of the piece of the executable data, the phone 12 re-routes another part of the executable data 44 to an identified application stored within the card 14.

The identified application of the card 14 processes the part of the executable data 44 received from the broadcast server 18 through the phone 12.

As a partial result, the identified application transmits to the phone 12 a proactive command 46 for displaying a window, such as "Display text", accompanied with a list of items that a user has to inform while selecting at least one item and/or entering data.

The phone 12 receives the proactive command and displays a window comprising the list of items, such as Bet Now for "name 1", "name 2", "name 3", or "name 4" while associating each name with a corresponding box to give an amount value for the selected horse.

Once the user has informed the list of items through the man machine interface of the phone, the phone 12 sends back to the card 14, as a response 48 to the proactive command, data parameterized by the user that requests to select for example "name 1 ", as the selected horse, associated with a "date and time" field provided by the broadcasted service, and "10 euros", as the typed amount value.

The card 14 receives and processes the response while signing the data relating to the response, namely "name 1 ", "July the 11^{th} at 4.00 o'clock p.m." as "date and time" that is provided by the broadcasted service through the executable data, and "10 euros".

As result of such a processing, the card 14 transmits, through the phone 12, to the mobile network server 116, a bet message 410 relating to data that is encrypted by the card 14 and that uses, as parameters, the data informed by the user and the broadcasted stream. The bet message 410 is sent via a Short Message Service (or SMS) message that requests a processing by the mobile network server 116, in order to be informed about a result with respect to the performed bet by the bettor.

Once the horse race has occurred and a winner is identified, the mobile network server 116 processes data transported within the bet message 410 by decrypting it and comparing the identifier of the winner with the one given by the bettor through the bet message 410.

The mobile network server 116 then transmits, through the phone 12, to the card 14, a message 412 relating to the result of the bet processed by the mobile network server 116, as a response to the bet message 410, by requesting to inform the phone user through the phone display screen.

According to another embodiment, instead of a message 412 relating to the result, it is a message relating to a success or a non-success of an execution of an application performed by the mobile network server 116.

The card 14, after having received the message 412 relating to the result, sends to the phone 12, for example, by using a proactive command, a message 414 by which a window is displayed by the phone display screen that informs the user that she or he has lost or won money the amount of which is given.

## Claims

1. A method (30) for accessing a service offered from a token, the token being coupled with a terminal, the terminal comprising means for receiving broadcasted messages, the broadcasted messages being broadcasted from at least one server, said first server,
**characterized in that** the method comprises the following steps:
- the first server sends (32), through the terminal, within the broadcasted messages at least one piece of data intended to the token and executable by the token, said executable data; and
- the token executes (38) the executable data by triggering an execution of an application embedded at least in part within the token.

2. Method according to claim 1, wherein, the broadcasted messages comprising audio and/or video data, the terminal (12) processes (34) the audio and/or video data and the terminal sends to the token (14) the executable data.

3. Method according to claim 1 or 2, wherein the application comprises at least one action without any user intervention.

4. Method according to claim 1 or 2, wherein, the terminal comprising a display (112) and a user terminal interface (19), the token executes the executable data by sending to the terminal a first command (46) for displaying at least one menu item, wherein the terminal displays a window listing at least one menu item to be selected by a terminal user, wherein the method further comprises a step in which a user selects at least one menu item amongst the at least one menu item, and, wherein the terminal sends to the token a second command (48), as a response to the first command for triggering an execution of an application relating to at least one selected menu item amongst the at least one menu item.

5. Method according to any of claims 1 to 4, wherein the token comprising means for transmitting, through the terminal, second data to at least one server, the token sends, through the terminal, to one server a request that allows the server to further execute the triggered application.

6. Method according to claim 5, wherein the token comprising means for receiving from at least one server, through the terminal, third data, the server executes a part of the application based upon the request and sends back, through the terminal, to the token a corresponding resulting response (412).

7. Method according to any of claims 4 to 6, when depending on claim 4, wherein the token sends to the terminal a third command (414) for displaying at least one piece of information relating to a success or a non-success of the execution of the application and/or a result of the execution of the application.

8. Method according to any of claims 1 to 7, wherein the triggered application within the token includes an authentication function and/or an electronic signature function.

9. Method according to claim 8, wherein the authentication function and/or the electronic signature function use at least one of the:
- at least one selected menu item amongst the at least one menu item and
- data informed by the terminal user.

10. Method according to any of claims 4 to 9, when depending on claim 4 wherein the offered service includes a service that interacts with a terminal user and at least one element of the following group:
- a betting service;
- a fidelity service;
- a transaction service;
- a payment service;
- a voting service;
- a survey service;
- a poll service;
- a questioning service.

11. Method according to any of claims 1 to 10, wherein the broadcasted messages include data relating to an Electronic Service Guide service.

12. Method according to any of claims 1 to 11, wherein the executable data includes data relating to a script.

13. A token (14) for accessing an offered service, the token being intended to be coupled with at least one external entity, the token comprising data storing means (24), data processing means (22) and communication means (26) for communicating with the external entity,
**characterized in that** the token is adapted to receive at least one piece of data executable by the token, said executable data;
and **in that** the token is adapted to execute the executable data by triggering an execution of an application embedded at least in part within the token.

14. A system (10) for accessing a service offered from a token (14), the system comprising a token and a terminal (12) coupled with the token, the token comprising first data storing means (24), first data processing means (22) and first communication means (22) for communicating with the terminal, the terminal comprising second data storing means, second data processing means and second communication means for communicating with the token, the terminal further comprising means for receiving messages broadcasted from outside the system,
**characterized in that** the terminal is adapted to extract from the broadcasted messages at least one piece of data intended to the token and executable by the token, said executable data, and send to the token the executable data;
and **in that** the token is adapted to execute the executable data by triggering an execution of an application embedded at least in part within the token.

15. System according to claim 14, wherein the terminal is a mobile phone (12) and the token is a smart card (14) of the SIM type and/or WIM type.
